# EUROPEAN PATENT SPECIFICATION

(11) **EP 3 878 686 B1**
(45) Date of publication and mention of the grant of the patent: **12.04.2023**
(21) Application number: 20171232.0
(22) Date of filing: 24.04.2020
(51) Int. Cl.: B60N 2/42, B60N 2/427, B60N 2/885, B60N 2/888

(54) **HEADREST WITH AN EXPANSION MECHANISM**
KOPFSTÜTZE MIT EINEM EXPANSIONSMECHANISMUS
APPUI-TÊTE AVEC UN MECHANISME D'EXPANSION

(30) Priority: 09.03.2020 CZ 20200120
(43) Date of publication of application: 15.09.2021
(73) Proprietor: Centrum dopravniho vyzkumu, v.v.i., 63600 Brno (CZ)
(72) Inventor: Bucsuhazy, Katerina, 67575 Senorady (CZ); Moravcova, Pavlina, 56992 Bystre (CZ); Kostikova, Martina, 67937 Borotin (CZ)
(74) Representative: Dadej, Leopold

(56) References cited:
- EP-A1- 3 188 930
- GB-A- 2 317 333

## Description

### Technical field

The present invention relates to a headrest provided with an expansion mechanism. This headrest protects the head and the neck even in case of an oblique or side collision.

### Background of the Invention

Headrests in vehicles are currently designed mainly to protect the head in case of a centric collision. As it is apparent from analysis of traffic accidents, serious injuries to the driver's head and cervical spine often occur during side and oblique crashes. Most of the rests used currently are not able to protect the head and cervical spine during oblique and side crashes or when the vehicle is rotating. In these types of crashes, the mechanism of how the injury arises is different.

The headrest known from the document EP3188930 is primarily characterized in that it has a pair of upper and lower rails that are connected through a middle stem. In the gap between each pair of guiding rails, guiding tracks are slidably arranged. Between the middle stem and a supporting coupling, a compression spring is arranged. Furthermore, an expandable cushioning leg is arranged around an extension supporting bracket. The safety feature of the expansion structure is activated using a sensor in the rest, which is adjustable to a certain angle of impact and acceleration value. However, the angle of extension of the side portions of the expansion structure is considerably limited in the described solution.

The headrest known from the document KR20070114331 comprises two side segments, which are activated by a spring as a result of the impact of the head on the headrest. After reducing the load on the headrest, the segments return to their original state, again by means of a spring. However, said side segments are adapted only to fixate the head or the chin of the passengers in case of a rear collision.

Rests with adjustable lateral sides are also known, primarily serving to ensure greater passenger comfort, not to increase his/her safety in the vehicle. For example, the document US2019210501 discloses a headrest provided with a sliding and rotating mechanism for adjusting the rest, which can be locked. A similar headrest is disclosed in the document KR101878280; this rest also has adjustable lateral sides attached to a central block, where a sliding guide is mounted that allows simple adjustment of the lateral sides with the help of a drive unit (engine). The document DE102012009366 discloses a rest that has side members (supports) adjustable with the help of a pneumatic unit. Another option is disclosed in the document DE102009021267, in which the headrest is provided with a comfortable side wing, which is connected to the rest by means of a joint, and if needed, the side part (wing) may be brought to the desired position through a rotary motion. However, these documents do not address the passenger's protection in case of a side collision.

Another headrest with extendable side portions is known from document GB2317333. This headrest comprises two side portions with arcuate sliding elements. These side portions can be extended manually to increase passenger's comfort. The angle of extension is however limited, and the headrest is not adapted to prevent a head injury in case of collision.

Therefore, it would be appropriate to come up with a headrest that would comprise expansion or extension elements with a sufficient extension interval and sufficient strength and that would allow to reliably protect the passenger's head and neck even in case of oblique or side collisions.

### Summary of the Invention

The above mentioned drawbacks are eliminated to a certain extent by a headrest with an expansion mechanism comprising a middle portion with a vertical axis in the middle of the middle portion and at least one side portion. The middle portion comprises a supporting structure and an activation element connected to a control unit. The side portion comprises a guiding structure of an arcuate shape slidingly placed in the supporting structure, wherein this guiding structure comprises a retracted position and an extended position. In the retracted position, the guiding structure of the at least one side portion extends past the vertical axis of the middle portion.

The control unit may be a control unit of a vehicle or an additional control unit. The extension of the side portion beyond the vertical axis in the retracted position, i.e. the fact that the given side portion extends from the respective lateral side of the middle portion all the way to the vertical axis in the middle of the middle portion and beyond it, allows a greater extension of the side portion in the extended position. However, the side portion may be sufficiently firmly fixed in the supporting structure even in the extended position, so the extended side portion provides a firm support for the head and/or the neck in case of a collision. The side portion of the headrest of the present invention may thus be extended more than in the case of the headrest with an expansion structure known in the art, in which both side portions are mutually aligned and share rails for defining the extension, therefore, they do not and cannot extend past the vertical line of the middle portion.

The headrest with an expansion mechanism preferably comprises two side portions, each located on the opposite side of the middle portion, wherein the guiding structures of both side portions are spaced apart from one another and extend beyond the vertical axis of the middle portion. The spacing of the side portions ensures that the retracted side portions do not obstruct one another, even when each of the side portions extends beyond the vertical axis of the middle portion towards the other side portion.

Preferably, the supporting structure is connected to stands. The supporting structure being provided with stands allows the headrest to be retracted to the seat, as in the case of conventional headrests.

Preferably, the guiding structure of at least one side portion extends past the vertical axis of the middle portion by at least one quarter of its length. With the increasing size of the extension of the side portion beyond the vertical axis of the middle portion, the length of the sliding connection between the guiding structure and the middle portion increases, and therefore, the size (i.e. length or angle) of the maximum extension of the side portion increases. However, in the extended position of the guiding structure, the guiding structure is sufficiently stably fixed in the middle portion.

Preferably, at least a part of the first guiding structure of the first side portion is placed higher than the second guiding structure of the second side portion. The spacing of the guiding structures is therefore in the direction with a non-zero vertical component.

Preferably, the guiding structure comprises a protrusion and the supporting structure comprises a backstop, wherein the protrusion and the backstop are located with respect to one another so that one stops the other in the extended position of the guiding structure. The backstop may be a protrusion on the supporting structure, a screw, or a pin fixed to the supporting structure, etc. The protrusion with the backstop therefore defines the maximum extension of the side portion and prevents the side portion from possibly falling out of the middle portion.

The activation element is preferably located in the position of the vertical axis of the middle portion, wherein the guiding structure of each side portion comprises a compression structure, wherein each compression structure abuts the activation element. Therefore, a single activation element ensures the extension of both side portions.

Preferably, the headrest of the invention comprises two activation members, wherein the guiding structure of each side portion comprises a compression structure, wherein a compression structure of a different side portion abuts each activation element. Thanks to that, the side portions may be extended individually, i.e. depending on the direction of the impact, only one side portion may be extended, as an example.

Preferably, the activation element is embodied as an expansion element selected from a group comprising a pyrocartridge, an engine, a pneumatic element with an electronically activatable lock, a hydraulic element with an electronically activatable lock, and a spring with an electronically activatable lock.

Preferably, in the extended position of the guiding structure, the side portion is extended from the middle portion by at least the distance of one quarter or at least one half or at least three quarters of the width of the supporting structure of the middle portion.

It is preferred when the middle portion is provided on the outside with cushioning of the middle portion and the side portion is provided on the outside with cushioning of the side portion.

Furthermore, the headrest with an expansion mechanism preferably comprises strength fabric, which is connected to the middle portion on one of its sides and to the side portion on the other one of its sides. The strength fabric prevents the passenger's head or neck from coming in contact with hard, non-cushioned components of the guiding or supporting structure.

The side portion may be designed as telescopic such that it comprises at least two guiding structures sliding with respect to one another, wherein each of these guiding structures is provided with the cushioning of the side portion.

Preferably, each guiding structure comprises an upper arm, a lower arm, a compression structure embodied as a central tube, wherein the upper arm, the lower arm, and the central tube are parallel to each other and are interconnected on the side by a vertical coupling, which simultaneously bears the cushioning of the side portion, wherein the central tube is extended closer to one of the arms. Furthermore, the supporting structure is preferably formed by a profile comprising four guiding cavities that extend through the entire width of the supporting structure, wherein one pair of the guiding cavities is located at the top and one pair of the guiding cavities is located at the bottom so that an opening for the central tubes extends between these two pairs of guiding cavities.

### Description of the Drawings

A summary of the invention is further clarified by means of exemplary embodiments thereof, which are described with reference to the accompanying drawings, in which:
fig. 1 schematically illustrates a section through the headrest with an expansion mechanism of the present invention in a vertical plane passing through both stands of the headrest,
fig. 2 schematically illustrates a view of the headrest of the invention from the side with an extended side portion,
fig. 3 schematically illustrates a perspective view of the headrest, wherein one side portion is extended and the other side portion is not extended,
fig. 4 schematically illustrates a section through the headrest of fig. 3, wherein this section is made horizontally through the central tube of the side portions,
fig. 5 schematically illustrates a section through the headrest of fig. 3, wherein this section is made horizontally through an arm of the side portion,
fig. 6 schematically illustrates an alternative embodiment of the invention is schematically shown viewed from the front, with the arms of one side portion retracted to the arms of the other side portion,
fig. 7 schematically illustrates an alternative embodiment is schematically shown viewed from the front, in which the guiding structure of each side portion has a single arm,
fig. 8 schematically illustrates an alternative embodiment from the front, in which both arms of one guiding structure are located between the arms of the other guiding structure,
fig. 9 schematically illustrates an embodiment from the front, in which the arms of the guiding structure of the left side portion are spaced apart upwards from the arms of the guiding structure of the right side portion,
fig. 10 is a schematic perspective view from of the rest in an embodiment with horizontally spaced apart arms, and
fig. 11 is a schematic perspective view of the rest with horizontally spaced apart arms in another alternative embodiment.

### Exemplary Embodiments of the Invention

The invention will be further clarified by means of exemplary embodiments with reference to the respective drawings.

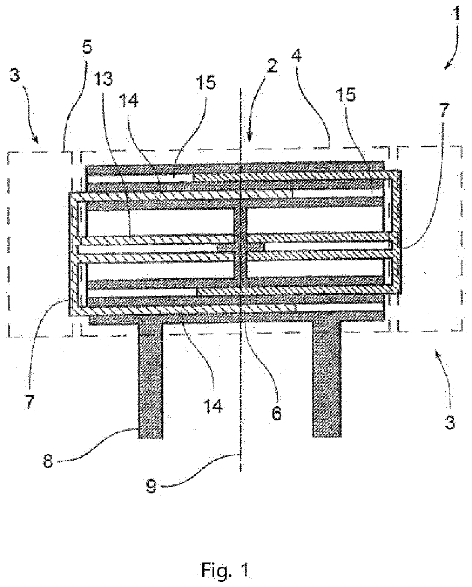

Fig. 1 shows an exemplary embodiment of a headrest 1 with an expansion mechanism of the present invention. The headrest 1 comprises a middle portion 2 and two identical side portions 3, wherein the middle portion 2 comprises a supporting structure 6 and a cushioning 4 of the middle portion. Each side portion 3 comprises a guiding structure 7 and a cushioning 5 of the side portion and is adjustable to a retracted and an extended position. Stands 8 are then attached to the supporting structure 6 from below, which serve to retract the headrest 1 to the seat. In fig. 1, both side portions 3 are in the retracted position, in which they partially extend beyond the vertical axis 9 of the middle portion, i.e. a part of the left side portion 3, particularly a part of its guiding structure 7, is located right of the vertical axis 9 of the middle portion when viewed from the front, see fig. 1, and analogously for the right side portion 3.

In the embodiment shown, each guiding structure 7 comprises an upper arm 14, a lower arm 14 a compression structure to interact with an activation element in the form of a central tube 13, which are parallel to each other and are interconnected on the side by a vertical coupling, which simultaneously bears the cushioning 5 of the side portion. The central tube 13 is extended closer to one of the arms 14. (See fig. 1.) When viewed from above, each arm 14 is bent into an arcuate shape.

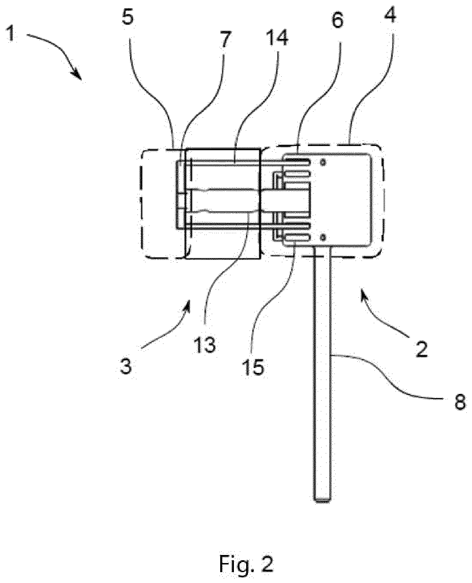

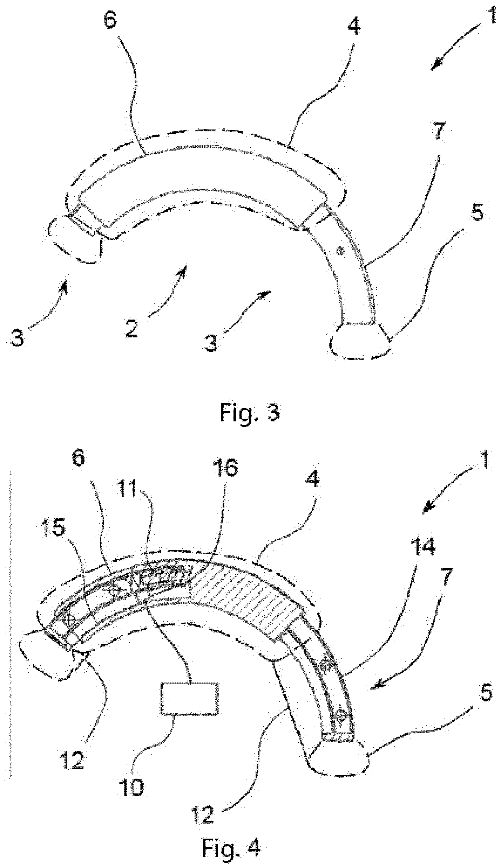

The supporting structure 6 is formed by a profile, which, when viewed from the front, is approximately rectangular, as is visible in fig. 1, and when viewed from above, is bent into an arc, as it is visible in figs. 3 a 4. The profile comprises four guiding cavities 15 that extend through the entire width of the supporting structure 6 - one pair of the guiding cavities 15 at the top and one pair of the guiding cavities 15 at the bottom. In fig. 2, these guiding cavities 15 have an approximately rectangular cross-section and are arranged above one another. Between these two pairs of guiding cavities 15, an opening for the central tubes 13 extends, which is divided in the middle using a divider. The guiding cavities 15 serve to slidingly fix the side portions 3 in the middle portion 2, wherein in each guiding cavity 15, only one arm 14 of one side portion 3 is fixed so that the arms 14 may extend past the vertical axis 9 of the middle portion 2, without the arms 14 of one side portion 3 impacting with the arms 14 of the other side portion 3. Therefore, the guiding cavities 15 serve as a rail for the sliding movement of the arms 14 and, together with them, so does the entire guiding structure 7. However, the guiding cavities 15 need not to be closed around the entire perimeter, they can be also partially open.

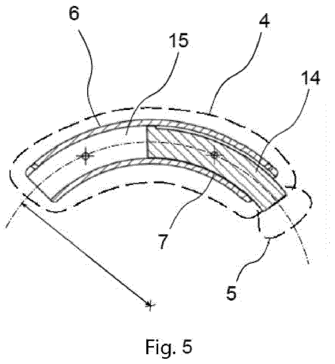

The supporting structure 6 shown has, when viewed from above, a radius of 125 mm to 165 mm depending on where the radius is measured. When measuring the radius of the horizontal axis of the supporting structure 6, this radius is 145 mm. Along this radius, the side portions 3 extend. The size of the extension is measured on this axis as well. The maximum width of the supporting structure 6, i.e. the dimension measured from the left to the right in fig. 1, is, in this embodiment, approximately 228 mm, i.e. the arc of the supporting structure 6 is around 85°. In alternative embodiments, these dimensions may be different, may depend on, for example, the type of the vehicle, presence and form of other safety elements, etc. For example, the radius of the horizontal axis of the supporting structure 6 may range from 100 mm to 250 mm, preferably from 120 to 200 mm. Therefore, the horizontal axis is a meant to be an arc, which extends through the supporting structure 6 approximately in the middle thereof, wherein it copies its bending. In fig. 5, the horizontal axis of the supporting structure 6 is indicated using a dashed line, and its radius is indicated using an arrow. The size of the extension of the side portions 3 on the guiding structure 7 is essential for safety, therefore, the arc of the extension may reach values greater than 20°, or more preferably, greater than 35°, preferably, however, greater than 50°. If we express the size of the extension of the side portions 3 on the guiding structure 7 relative to the width of the supporting structure 6 of the middle portion 2, the guiding structure 7 may be extended on each side by at least a quarter, or preferably, by a half, or by at least three quarters of this width, measured in accordance with the horizontal axis defined below.

In the embodiment shown, the left side portion 3 in fig. 1 is fixed in the lower one of each pair of guiding cavities 15 in the supporting structure 2, the right side portion 3 is fixed in the upper one of each pair of the guiding cavities 15. A view of the extended right side portion 3 from the right is shown in fig. 2, in which the sliding fixation of both arms 14 of this side portion 3 in the upper one of each pair of the guiding cavities 15 is visible. At the same time, both central tubes 13 are mutually axially aligned, which is provided by the arms 14 of the side portions 3 being vertically spaced apart and the central tube 13 being correspondingly offset towards one of the arms 14. At the same time, the arms 14 of both side portions 3 are longer than the length of a half of the guiding cavities 15 in the supporting structure 2, meaning the arms 14 of the side portions 3 partially overlap. Thanks to that, greater extension of the side portions 3 is allowed while maintaining sufficient stability after the extension. The length of the maximum extension increases with the increasing length of the overlapping parts of the arms 14 of the guiding structure 7. The length of the arms 14 may also be equal to the length of the guiding cavities 15 in the supporting structure 6 so that each side portion 3 is then extendable approximately by the length of the guiding cavity 15. The length of the arms 14, the guiding cavities 15, and thus also the length of the extension of the side portions 3 is understood herein as the length of these elements measured along the horizontal axis of the supporting structure 6, wherein this axis is bent into an arc, therefore, these lengths are also the lengths of the arcs. The length of the extension of the side portion 3 is greater than a half of the length of the guiding cavity 15. In a preferred embodiment, the length of the extension is at least five eighths of the length of the guiding cavity 15, which, in an embodiment with equally long arms 14 on both side portions 3, means that the arms overlap over at least a quarter of the length of each arm 14. More preferably, the length of the extension is at least three quarters of the length of the guiding cavity 15.

In some embodiments, the guiding cavities 15 may not extend through the entire width of the supporting structure 2, instead, they may be closed at one end. The length of the extension of the side portion 3 may then be approximately equal to the length of the respective guiding cavity 15.

A stop prevents the side portion 3 from falling out of the supporting structure 6, i.e. the arms 14 completely extending from the guiding cavities 15. In the embodiment shown, the stop is implemented as a protrusion at the free end of each arm 14 and a backstop in the form of a screw fixed in the opening at the end of the respective guiding cavity 15 so that a part of this screw extends inside the guiding cavity 15. With the maximum extension of the side portion, the protrusion comes into contact with the screw, thereby preventing additional extension of the side portion. The screw openings are visible in fig. 2, in which these openings are located right to the uppermost and lowermost guiding cavity 15. The protrusion on the guiding structure 7 is visible in fig. 5. Even the screw opening is visible in fig. 5, but for clarity, the opening is shown at both ends of the guiding cavity 15, although, at least in the embodiment shown, only the opening closer to the side portion 3 shown is of functional importance.

Alternatively, the stop may be embodied in any other way, for example, the screw may be located on one or both arms 14 of the side portion 3, and the protrusion is located at the end of the guiding cavity 15, or the screws may be replaced by pins or other protrusions. Therefore, the backstop on the supporting structure 6 may be any element, which, together with the protrusion or another element on the guiding structure 7, will define the maximum extension of the side portion 3. For example, a groove may be formed on the surface of the arm 14 closed at the free end of the arm 14, wherein during extension, the backstop on the supporting structure 6 is guided in the given groove, or the groove is guided on a backstop, and during maximum extension, the contact of the end of the groove with the backstop prevents additional extension.

The divider in the opening for the central tubes 13 is provided with a latching protrusion on either side, on which a free end of the at least partially hollow central tube 13 is mounted in the retracted state of the side portion 3. Alternative embodiments are also possible, in which a rod is used instead of the central tube 13, i.e. the central tube 13 is completely filled and there is no latching protrusion on the divider.

In the proximity of the divider, an activation element 11 is located on each of its sides, which performs the extension of the respective side portion. The activation element 11 may be located inside the central tube 13, for example, it may be a pyrocartridge, an inflatable bag, a piston, an extensible bag filled with foam under pressure, or a preloaded spring. Alternatively, the activation element 11 may be located outside the central tube 13, for example, between the end of the central tube 13 and the divider, or it may be fixed by means of a protrusion on the outer surface of the central tube 13 and another protrusion inside the opening for the central tubes 13 or by means of the divider. The spring can be, for example, coiled, pneumatic, etc.

In the exemplary embodiment shown, the activation element is a preloaded spring that permanently pushes the respective side portion 3 out of the supporting structure 6. The spring is schematically shown in fig. 4, in which the headrest 1 is shown with the right-side portion 3 extended. At one end, the spring leans on the divider, and at the other end, it leans on a rim, not shown, inside the central tube 13 or the bottom of the cavity in the central tube 13. A part of this activation element 11 is a safety feature, for example, an electronically activatable lock 16, which prevents the extension of the side portion 3. The activation element 11 is then activated by releasing the safety feature. The activation may be controlled using e.g. a control unit of the vehicle based on data from the sensor(s) or detector(s) that evaluate the direction and force of impact, etc.

After the activation element 11 is activated, i.e. after the safety feature is released, the respective side portion 3 is extended along an arcuate path given by the shape of the guiding cavities 15 in the supporting structure 6. At the same time, only one of the side portions 3 may be extended, as shown in figs. 3 and 1, or both side portions 3 may be extended simultaneously depending on the evaluation performed by the control unit 10 for the headrest 1. The control unit 10 is interconnected with the activation element 11, e.g. with the electronically activatable lock 16 so as to lock and release the guiding structure 7, or eventually with a sensor or detector that detects collisions, and/or with a control unit of the vehicle. In some embodiments, only one activation element 11 may be part of the headrest 1 common for both side portions 3. If fig. 4, the lock 16 is schematically indicated, interconnected with the schematically indicated control unit 10. Given the vertical spacing of the guiding cavities 15, only one of the cavities and only one lock 16 and one spring are visible here. In the embodiment of fig. 4, the guiding cavity 15 and the arm 14 extend only slightly beyond the vertical axis 9 of the middle portion 2, and therefore, also the vertical axis of the supporting structure 6. The vertical axis 9 of the middle portion is shown using a dashed line in fig. 1.

A strength fabric 12 is located between the side portion 3 and the middle portion 2, which, when the side portion 3 is extended, is stretched and thereby prevents the head from possibly coming in contact with non-cushioned parts of the side portion 3, i.e. the arms 14 or the central tube 13. The strength fabric 12 is schematically shown in fig. 4, where it is attached between the cushioning 1 of the middle portion and the cushioning 5 of the side portion. Alternatively, the strength fabric 12 may be connected to the supporting structure 6 and/or the guiding structure 7. The strength fabric 12 may be, for example, a suitable textile or film, or another foam or elastic material.

In an alternative embodiment of the headrest 1 with an expansion mechanism, the guiding cavities 15 in the supporting structure may have any other cross-section, for example, oval or circular, or they may be openings with I-, T-, or L-shaped cross-sections. The arms 14 may have a corresponding cross-section shape for sliding fixation inside the guiding cavities 15. Alternatively, the number of the guiding cavities 15 and the related number of the arms 14 of the guiding structures 7 of the side portions 3 may be any other number. For example, each side portion 3 may have only one arm 14 on its guiding structure 7 so that the supporting structure 6 comprises only two guiding cavities 15 and one opening for the central tubes 13.

In alternative embodiments, the arrangement of the guiding cavities 15 in the supporting structure 6 may be different. For example, the guiding cavities 15 for the arms 14 of one side portion 3 may be spaced apart from the guiding cavities 15 for the arms 14 of the other side portion 3 in the horizontal direction. For example, both arms 14 of one side portion 3 may be more in the front than both arms 14 of the other side portion 3, or one side portion 3 may have the upper arm 14 more in the front than the lower arm 14, and the other side portion 3 then has the upper arm 14 more in the rear than the lower arm 14 or vice versa.

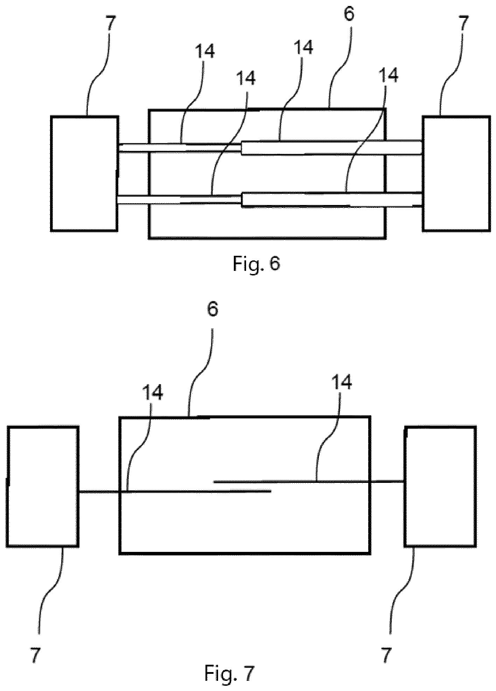

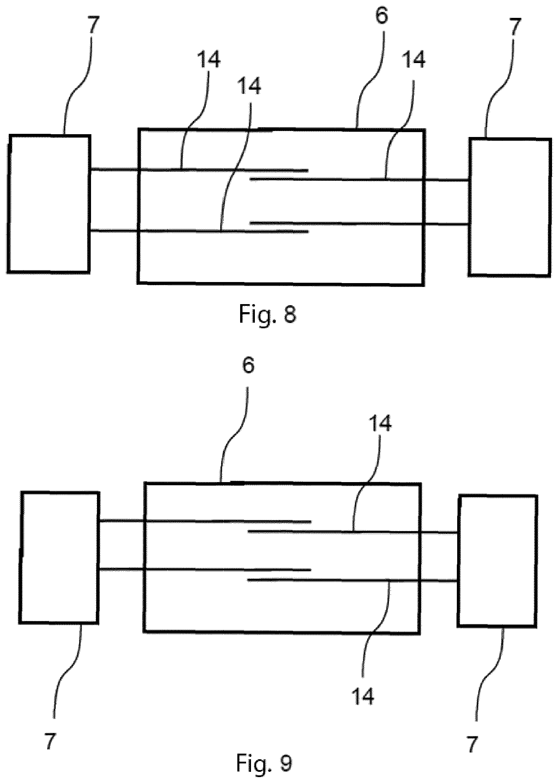

In another alternative embodiment, both arms 14 of one side portion 3 may be located between the arms 14 of the other side portion 3 in the vertical direction, as shown in fig. 8. Fig. 9 then shows an embodiment in which the lower arm 14 of the first guiding structure 7 is above the lower arm 14 of the second one, and the upper arm 14 of the first guiding structure 7 is above the upper arm 14 of the second guiding structure 7. Embodiments in which the left guiding structure 7 is located higher are possible, as well as alternative embodiments in which the right guiding structure 7 is higher. Figs. 8 and 9 are schematic, with each arm 14 shown therein using only a line segment, the central tubes 13 are not shown, or they are not part of the embodiments shown, and the cushioning is not shown either. Alternatively, in the retracted state of both side portions 3, the upper arm 14 one side portion 3 may be located partially inside the hollow upper arm 14 of the second side portion 3 and/or the lower arm 14 of a one side portion 3 may be partially retracted to the at least partially hollow lower arm 14 of the other of the side portions 3. This situation is schematically shown in fig. 6, in which the arms 14 on the left are retracted to the arms 14 on the right. In this embodiment, one activation element 11 may be located inside the stronger arm 14 for the lower arms 14, and another activation element 11 may be located inside the stronger arm 14 for the other pair of the arms 14 so that both side portions 3 are extended simultaneously. An embodiment is also possible in which the activation elements lean outside the arms 14, e.g. on a flange in the guiding cavity 15 so that each arm 14 may have its own activation element 1, or the activation elements may be near the central tubes 13, as it is in the embodiment of fig. 1. The guiding structure 7 of one side portion 3 may be spaced apart from the guiding structure 7 of the other side portion 3 in any direction approximately perpendicular to the direction of extension of the side portions 3.

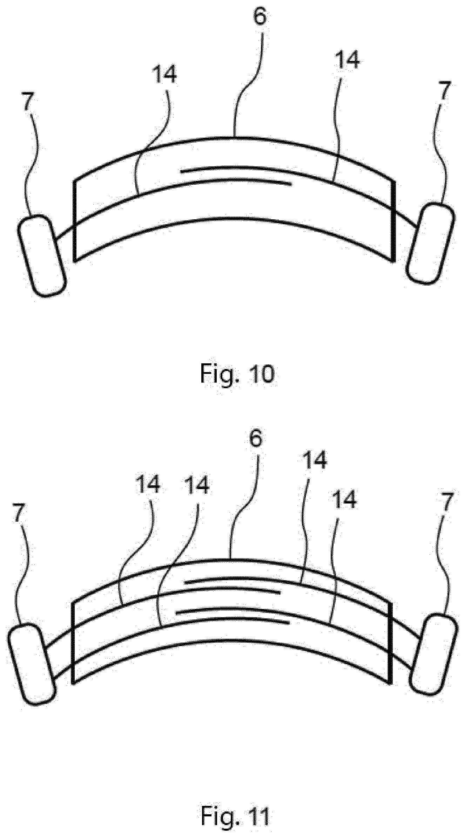

Fig. 10 schematically indicates a perspective view of an embodiment of the invention in which the side portions 3, particularly their arms 14, are spaced apart from each other in the horizontal, i.e. forward-backward, direction. In the embodiment shown, the guiding structure 7 of each side portion 3 has only one arm 14, or it has two arms 14, one above another so that when viewed from above, only one of them is visible. In fig. 11, a similar schematic perspective view of an embodiment is shown in which each guiding structure 7 has two arms 14 that are horizontally spaced apart from each other, wherein the arms 14 of one guiding structure 7 are more in the front than the arms 14 of the other guiding structure 7 so that each guiding structure 7 has one arm 14 located between the arms 14 of the other guiding structure 7. In such embodiments, the shape of the arms 14 and the guiding cavities 15 is, compared to the embodiment of fig. 2, rotated by, for example, 90°, i.e. their cross-section has, in the upward-downward direction, a greater dimension than in the forward-backward direction so that the arms 14 fit into the supporting structure 2, or the shape of the arms 14 and the guiding cavities 15 may be e.g. circular.

Alternatively or in addition, the sliding movement between the side portions 3 and the middle portion 2 may be determined by other guiding elements than the arms 14 fixed in the guiding cavities 15, as described above. For example, plain or roller bearings or wheels may be used to define the sliding movement.

In some alternative embodiments, the left-side portion 3 may be of a different shape than the right-side portion 3. For example, they may differ in shapes of the arms 14, for example, as described above for the embodiments with the arms 14 retracted to one another, in shape of the cushioning, the shape of the central tubes 13, the length of the extension (and thus the length of the arms 14), the trajectory of the extension, etc. All the guiding cavities 15 in the supporting structure 7 therefore need not to have the same shape. In some alternative embodiments, the arms 14 of the guiding structure 7 of only one extension side portion 3 may be longer than a half of the width of the supporting structure 6, i.e. the arms 14 on only one side portion 3 extend beyond the vertical axis 9 of the supporting structure 6. Therefore, the other side portion 3 then has a shorter length of extension.

In an alternative embodiment of the headrest 1 of the invention, only one side portion 3 is a part of the headrest 1. Therefore, in this embodiment, extension occurs only on one side. For example, the side portion 3 may be on only the inner side of the headrest 1, wherein the passenger's head may be protected on the outer side using a conventional airbag built into the automobile's pillar.

In an alternative embodiment, the activation element 11 may be in the form of a linear or rotary engine, wherein this engine is adapted for generating sufficiently fast movement to extend the side portions 3.

In an alternative embodiment, the guiding structure may comprise a different number of central tubes 13 and/or these central tubes 13 may have a different shape. In some embodiments, the guiding structure 7 comprises no central tube 13, wherein the activation elements 11 are located near the free ends of the arms 14. In some embodiments, the guiding structure 7 comprises a single central tube 13 and no arms 14, or a single arm 14 and no central tube 13 (see fig. 7) so that the sliding movement of the side portion 3 is then defined by a single elongated element.

In another alternative embodiment, the central tubes 13 on various guiding structures 7 are not mutually axially aligned. In another embodiment, the opening for the central tubes 13 is not provided with a divider, meaning that the central tubes 13 may be in mutual contact, or one may be retracted inside the other. In such a case, the central tubes 13 may share the activation element 11. In an embodiment with mutually spaced apart central tubes 13 or mutually retractable central tubes 13, the central tubes 13 may be longer than the length of a half of the opening for the central tubes 13 so that the central tube 13 may be fixed inside the supporting structure 6 even when the side portion 3 is extended.

In some embodiments, the shape of the headrest 1, e.g. the shape of the trajectory of the extension, may be adjustable with respect to the particular passenger, e.g. his/her height or head size. The parameters of the headrest 1 may then be stored in the automobile's memory.

In an alternative embodiment of the invention, the side portion 3, or both side portions 3, is/are designed as telescopic so that it/they comprise(s) at least two guiding structures 7 sliding with respect to one another. When the side portion 3 is extended, one guiding structure 7 then slides with respect to the other one, which may be firmly connected to the supporting structure 6 or may slide with respect to it. The side portion 3 may comprise even a larger number of guiding structures 7 sliding with respect to one another. For example, one guiding structure 7 may comprise a vertical coupling and the first sections of the arms 14 and/or central tube 13, and another guiding structure 7 then comprises one or more additional sections of the arms 14 and/or central tube 13, wherein these sections are sliding with respect to one another, e.g. a certain section is partially retractable to an adjacent section, or the sections are spaced apart from each other and interconnected by sliding guide elements on their surfaces, etc. Preferably, each guiding structure 7 is then interconnected with the cushioning 5 of the side portion. In some embodiments, a plurality of supporting structures 7 on one side portion may have a vertical coupling.

The side portion 3 may have a single cushioning 5 of the side portion common for all of its guiding structures 7, or it may comprise a plurality of pieces of the cushioning 5 of the side portion for the individual guiding structures 7. Alternatively, only one of the guiding structures 7 of a given side portion 3 is provided with a cushioning, and the strength fabric 12 prevents the head from impacting on the other guiding structures 7. Some or all of the features of the embodiments described above and shown in the drawings may be included even in the embodiments with telescopic side portions 3.

### List of reference signs

- 1 -: headrest
- 2 -: middle portion
- 3 -: side portion
- 4 -: cushioning of the middle portion
- 5 -: cushioning of the side portion
- 6 -: supporting structure
- 7 -: guiding structure
- 8 -: stand
- 9 -: vertical axis of the middle portion
- 10 -: control unit
- 11 -: activation element
- 12 -: strength fabric
- 13 -: central tube
- 14 -: arm
- 15 -: guiding cavity
- 16 -: lock

## Claims

1. A headrest (1) with an expansion mechanism comprising a middle portion (2) with a vertical axis (9) in the middle of the middle portion (2) and at least one side portion (3), where the middle portion (2) comprises a supporting structure (6) and an activation element (11) connected to a control unit (10) and the side portion (3) comprises a guiding structure (7) of an arcuate shape slidingly arranged in the supporting structure (6) having a retracted position and an extended position, **characterised in that** in the retracted position, the guiding structure (7) of the at least one side portion (3) extends from a lateral side of the middle portion (2) to the vertical axis in the middle of the middle portion (2) and beyond the vertical axis.

2. The headrest (1) with an expansion mechanism according to claim 1, **characterised in that** it comprises two side portions (3), each located on the opposite side of the middle portion (2), wherein the guiding structures (7) of both side portions (3) are spaced apart from one another and extend beyond the vertical axis (9) of the middle portion (2).

3. The headrest (1) with an expansion mechanism according to any of the preceding claims, **characterised in that** the supporting structure (6) is connected to the stands (8).

4. The headrest (1) with an expansion mechanism according to any of the preceding claims, **characterised in that** the guiding structure (7) of at least one side portion (3) extends beyond the vertical axis (9) of the middle portion by at least one quarter of its length.

5. The headrest (1) with an expansion mechanism according to claim 2, **characterised in that** at least a part of the first guiding structure (7) of the first side portion (3) is located higher than the second guiding structure (7) of the second side portion (3).

6. The headrest (1) with an expansion mechanism according to any of the preceding claims, **characterised in that** the guiding structure (7) comprises a protrusion and the supporting structure (6) comprises a backstop, wherein the protrusion and the backstop are located with respect to one another so that one stops the other in the extended position of the guiding structure (7).

7. The headrest (1) with an expansion mechanism according to claim 2, **characterised in that** the activation element (11) is located in the position of the vertical axis (9) of the middle portion (2), wherein the guiding structure (7) of each side portion (3) comprises a compression structure, wherein each compression structure abuts the activation element (11).

8. The headrest (1) with an expansion mechanism according to claim 2, **characterised in that** it comprises two activation elements (11), wherein the guiding structure (7) of each side portion (3) comprises the compression structure, wherein the compression structure of a different side portion (3) abuts each activation element (11).

9. The headrest (1) with an expansion mechanism according to any of the preceding claims, **characterised in that** the activation element (11) is embodied as an expansion element selected from a group comprising a pyrocartridge, an engine, a pneumatic element with an electronically activatable lock (16), a hydraulic element with an electronically activatable lock (16), and a spring with an electronically activatable lock (16).

10. The headrest (1) with an expansion mechanism according to any of the preceding claims, **characterised in that** in the extended position of the guiding structure (7), the side portion (3) is extended from the middle portion (2) by at least the distance of one quarter or at least one half or at least three quarters of the width of the supporting structure (6) of the middle portion (2).

11. The headrest (1) with an expansion mechanism according to any of the preceding claims, **characterised in that** the middle portion (2) is provided on the outside with a cushioning (4) of the middle portion (2) and the side portion (3) is provided on the outside with a cushioning (5) of the side portion (3).

12. The headrest (1) with an expansion mechanism according to claim 11, **characterised in that** it further comprises a strength fabric (12), which is connected to the middle portion (2) on one of its sides and to the side portion (3) on the other of its sides.

13. The headrest (1) with an expansion mechanism according to claim 11, **characterised in that** the side portion (3) is designed as telescopic, so that it comprises at least two guiding structures (7) sliding with respect to each another, wherein each of these guiding structures (7) is provided with the cushioning (5) of the side portion (3).

14. The headrest (1) with an expansion mechanism according to claim 2, **characterised in that** each guiding structure (7) comprises an upper arm (14), a lower arm (14) and a compression structure embodied as a central tube (13), where the upper arm (14), the lower arm (14), and the central tube (13) are parallel to each other and are mutually interconnected on the side by a vertical coupling, which simultaneously bears the cushioning (5) of the side portion, wherein the central tube (13) extends closer to one of the arms (14), furthermore, the supporting structure (6) is formed by a profile comprising four guiding cavities (15) that extend through the entire width of the supporting structure (6), wherein one pair of the guiding cavities (15) is located at the top and one pair of the guiding cavities (15) is located at the bottom such that an opening for the central tubes (13) extends between these two pairs of guiding cavities (15).

## Patentansprüche

1. Eine Kopfstütze (1) mit einem Expansionsmechanismus, umfassend einen Mittelabschnitt (2) mit einer vertikalen Achse (9) in der Mitte des Mittelabschnitts (2) und mindestens einen Seitenabschnitt (3), wobei der Mittelabschnitt (2) eine Tragstruktur (6) und ein mit einer Steuereinheit (10) verbundenes Aktivierungselement (11) umfasst und der Seitenabschnitt (3) eine Führungsstruktur (7) einer bogenförmigen Form umfasst, die gleitend in der Tragstruktur (6) mit einer eingefahrenen Position und einer ausgefahrenen Position angeordnet ist, **dadurch gekennzeichnet, dass** in der eingefahrenen Position, die Führungsstruktur (7) des mindestens einen Seitenabschnitts (3) sich von einer lateralen Seite des Mittelabschnitts (2) zur vertikalen Achse in der Mitte des Mittelabschnitts (2) und über die vertikale Achse hinaus erstreckt.

2. Die Kopfstütze (1) mit einem Expansionsmechanismus nach Anspruch 1, **dadurch gekennzeichnet, dass** sie zwei Seitenabschnitte (3) umfasst, die jeweils auf der gegenüberliegenden Seite des Mittelabschnitts (2) angeordnet sind, wobei die Führungsstrukturen (7) beider Seitenabschnitte (3) voneinander beabstanden sind und sich über die vertikale Achse (9) des Mittelabschnitts (2) erstrecken.

3. Die Kopfstütze (1) mit einem Expansionsmechanismus nach einem der vorhergehenden Ansprüche, **dadurch gekennzeichnet, dass** die Tragstruktur (6) mit den Ständern (8) verbunden ist.

4. Die Kopfstütze (1) mit einem Expansionsmechanismus nach einem der vorhergehenden Ansprüche, **dadurch gekennzeichnet, dass** sich die Führungsstruktur (7) mindestens eines Seitenabschnitts (3) um mindestens ein Viertel seiner Länge über die vertikale Achse (9) des Mittelabschnitts hinaus erstreckt.

5. Die Kopfstütze (1) mit einem Expansionsmechanismus nach Anspruch 2, **dadurch gekennzeichnet, dass** mindestens ein Teil der ersten Führungsstruktur (7) des ersten Seitenabschnitts (3) höher als die zweite Führungsstruktur (7) des zweiten Seitenabschnitts (3) angeordnet ist.

6. Die Kopfstütze (1) mit einem Expansionsmechanismus nach einem der vorhergehenden Ansprüche, **dadurch gekennzeichnet, dass** die Führungsstruktur (7) einen Vorsprung umfasst und die Tragstruktur (6) einen Rückanschlag umfasst, wobei der Vorsprung und der Rückanschlag zueinander angeordnet sind, so dass sie in der ausgefahrenen Position der Führungsstruktur (7) aneinander anschlagen.

7. Die Kopfstütze (1) mit einem Expansionsmechanismus nach Anspruch 2, **dadurch gekennzeichnet, dass** das Aktivierungselement (11) in der Position der vertikalen Achse (9) des Mittelabschnitts (2) angeordnet ist, wobei die Führungsstruktur (7) jedes Seitenabschnitts (3) eine Kompressionsstruktur umfasst, wobei jede Kompressionsstruktur an dem Aktivierungselement (11) anliegt.

8. Die Kopfstütze (1) mit einem Expansionsmechanismus nach Anspruch 2, **dadurch gekennzeichnet, dass** sie zwei Aktivierungselemente (11) umfasst, wobei die Führungsstruktur (7) jedes Seitenabschnitts (3) die Kompressionsstruktur umfasst, wobei die Kompressionsstruktur eines anderen Seitenabschnitts (3) an jedem Aktivierungselement (11) anliegt.

9. Die Kopfstütze (1) mit einem Expansionsmechanismus nach einem der vorhergehenden Ansprüche, **dadurch gekennzeichnet, dass** das Aktivierungselement (11) als ein Expansionselement ausgebildet ist, das aus einer Gruppe ausgewählt ist, die eine Pyrokartusche, einen Motor, ein pneumatisches Element mit einem elektronisch aktivierbaren Schloss (16), ein hydraulisches Element mit einem elektronisch aktivierbaren Schloss (16) und eine Feder mit einem elektronisch aktivierbaren Schloss (16) umfasst.

10. Die Kopfstütze (1) mit einem Expansionsmechanismus nach einem der vorhergehenden Ansprüche, **dadurch gekennzeichnet, dass** der Seitenabschnitt (3) in der ausgefahrenen Position der Führungsstruktur (7) von dem Mittelabschnitt (2) um mindestens den Abstand von einem Viertel oder mindestens einer Hälfte oder mindestens drei Viertel der Breite der Tragstruktur (6) des Mittelabschnitts (2) ausgefahren ist.

11. Die Kopfstütze (1) mit einem Expansionsmechanismus nach einem der vorhergehenden Ansprüche, **dadurch gekennzeichnet, dass** der Mittelabschnitt (2) außen mit einer Polsterung (4) des Mittelabschnitts (2) versehen ist und der Seitenabschnitt (3) außen mit einer Polsterung (5) des Seitenabschnitts (3) versehen ist.

12. Die Kopfstütze (1) mit einem Expansionsmechanismus nach Anspruch 11, **dadurch gekennzeichnet, dass** sie ferner ein Festigkeitsgewebe (12) umfasst, das an einer seiner Seiten mit dem Mittelabschnitt (2) und auf der anderen seiner Seiten mit dem Seitenabschnitt (3) verbunden ist.

13. Die Kopfstütze (1) mit einem Expansionsmechanismus nach Anspruch 11, **dadurch gekennzeichnet, dass** der Seitenabschnitt (3) teleskopartig ausgebildet ist, so dass er mindestens zwei gegeneinander verschiebbare Führungsstrukturen (7) umfasst, wobei jede dieser Führungsstrukturen (7) mit der Polsterung (5) des Seitenabschnitts (3) versehen ist.

14. Die Kopfstütze (1) mit einem Expansionsmechanismus nach Anspruch 2, **dadurch gekennzeichnet, dass** jede Führungsstruktur (7) einen oberen Arm (14), einen unteren Arm (14) und eine Kompressionsstruktur umfasst, die als zentrales Rohr (13) ausgebildet ist, wobei der obere Arm (14), der untere Arm (14) und das zentrale Rohr (13) parallel zueinander sind und auf der Seite durch eine vertikale Kupplung miteinander verbunden sind, die gleichzeitig die Polsterung (5) des Seitenabschnitts trägt, wobei das zentrale Rohr (13) sich näher an einem der Arme (14) erstreckt, ferner ist die Tragstruktur (6) durch ein Profil mit vier sich durch die gesamte Breite der Tragstruktur (6) erstreckenden Führungshohlräumen (15) gebildet, wobei ein Paar der Führungshohlräume (15) oben und ein Paar der Führungshohlräume (15) unten angeordnet ist, so dass sich eine Öffnung für die zentralen Rohre (13) zwischen diesen beiden Paaren von Führungshohlräumen (15) erstreckt.

## Revendications

1. Un appui-tête (1) avec un mécanisme d'expansion comprenant une partie centrale (2) avec un axe vertical (9) au milieu de la partie centrale (2) et au moins une partie latérale (3), où la partie centrale (2) comprend une structure de support (6) et un élément d'activation (11) relié à une unité de commande (10) et la partie latérale (3) comprend une structure de guidage (7) d'une forme arquée disposée de manière coulissante dans la structure de support (6) ayant une position rétractée et une position étendue, **caractérisé en ce que** dans la position rétractée, la structure de guidage (7) de l'au moins une partie latérale (3) s'étend d'un côté latéral de la partie centrale (2) à l'axe vertical au milieu de la partie centrale (2) et au-delà de l'axe vertical.

2. L'appui-tête (1) avec un mécanisme d'expansion selon la revendication 1, **caractérisé en ce qu'**il comprend deux parties latérales (3), chacune située sur le côté opposé de la partie centrale (2), où les structures de guidage (7) des deux parties latérales (3) sont espacées l'une de l'autre et s'étendent au-delà de l'axe vertical (9) de la partie centrale (2).

3. L'appui-tête (1) avec un mécanisme d'expansion selon l'une quelconque des revendications précédentes, **caractérisé en ce que** la structure de support (6) est reliée aux supports (8).

4. L'appui-tête (1) avec un mécanisme d'expansion selon l'une quelconque des revendications précédentes, **caractérisé en ce que** la structure de guidage (7) d'au moins une partie latérale (3) s'étend au-delà de l'axe vertical (9) de la partie médiane d'au moins un quart de sa longueur.

5. L'appui-tête (1) avec un mécanisme d'expansion selon la revendication 2, **caractérisé en ce qu'**au moins une partie de la première structure de guidage (7) de la première partie latérale (3) est située plus haut que la seconde structure de guidage (7) de la seconde partie latérale (3).

6. L'appuie-tête (1) avec un mécanisme d'expansion selon l'une quelconque des revendications précédentes, **caractérisé en ce que** la structure de guidage (7) comprend une saillie et la structure de support (6) comprend une butée arrière, où la saillie et la butée arrière sont situées l'une par rapport à l'autre de telle sorte que l'une s'arrête à l'autre dans la position étendue de la structure de guidage (7).

7. L'appui-tête (1) avec un mécanisme d'expansion selon la revendication 2, **caractérisé en ce que** l'élément d'activation (11) est situé dans la position de l'axe vertical (9) de la partie centrale (2), où la structure de guidage (7) de chaque partie latérale (3) comprend une structure de compression, où chaque structure de compression vient en butée contre l'élément d'activation (11).

8. L'appui-tête (1) avec un mécanisme d'expansion selon la revendication 2, **caractérisé en ce qu'**il comprend deux éléments d'activation (11), où la structure de guidage (7) de chaque partie latérale (3) comprend la structure de compression, où la structure de compression d'une partie latérale différente (3) vient en butée contre chaque élément d'activation (11).

9. L'appui-tête (1) avec un mécanisme d'expansion selon l'une quelconque des revendications précédentes, **caractérisé en ce que** l'élément d'activation (11) est réalisé sous la forme d'un élément d'expansion choisi dans un groupe comprenant une pyrocartouche, un moteur, un élément pneumatique avec un verrou à activation électronique (16), un élément hydraulique avec un verrou à activation électronique (16), et un ressort avec un verrou à activation électronique (16).

10. L'appui-tête (1) avec un mécanisme d'expansion selon l'une quelconque des revendications précédentes, **caractérisé en ce que** dans la position étendue de la structure de guidage (7), la partie latérale (3) est étendue à partir de la partie centrale (2) d'au moins la distance d'un quart ou d'au moins une moitié ou d'au moins trois quarts de la largeur de la structure de support (6) de la partie centrale (2).

11. L'appui-tête (1) avec un mécanisme d'expansion selon l'une quelconque des revendications précédentes, **caractérisé en ce que** la partie centrale (2) est pourvue sur l'extérieur d'un rembourrage (4) de la partie centrale (2) et la partie latérale (3) est pourvue sur l'extérieur d'un rembourrage (5) de la partie latérale (3).

12. L'appui-tête (1) avec un mécanisme d'expansion selon la revendication 11, **caractérisé en ce qu'**il comprend en outre un tissu de résistance (12) qui est relié à la partie centrale (2) sur l'un de ses côtés et à la partie latérale (3) sur l'autre de ses côtés.

13. L'appuie-tête (1) avec un mécanisme d'expansion selon la revendication 11, **caractérisé en ce que** la partie latérale (3) est conçue comme télescopique, de telle sorte qu'elle comprend au moins deux structures de guidage (7) coulissant l'une par rapport à l'autre, où chacune de ces structures de guidage (7) est pourvue du rembourrage (5) de la partie latérale (3).

14. L'appuie-tête (1) avec un mécanisme d'expansion selon la revendication 2, **caractérisé en ce que** chaque structure de guidage (7) comprend un bras supérieur (14), un bras inférieur (14) et une structure de compression réalisée sous la forme d'un tube central (13), où le bras supérieur (14), le bras inférieur (14) et le tube central (13) sont parallèles l'un à l'autre et sont mutuellement interconnectés sur le côté par un couplage vertical qui porte simultanément le rembourrage (5) de la partie latérale, où le tube central (13) s'étend plus près de l'un des bras (14), en outre, la structure de support (6) est formée par un profil comprenant quatre cavités de guidage (15) qui s'étendent sur toute la largeur de la structure de support (6), où une paire des cavités de guidage (15) est située au sommet et une paire des cavités de guidage (15) est située au fond de telle sorte qu'une ouverture pour les tubes centraux (13) s'étend entre ces deux paires de cavités de guidage (15).
